# EUROPÄISCHE PATENTSCHRIFT

(11) **EP 0 283 982 B1**
(45) Veröffentlichungstag und Bekanntmachung des Hinweises auf die Patenterteilung: **10.02.1993**
(21) Anmeldenummer: 88104442.4
(22) Anmeldetag: 19.03.1988
(51) Int. Cl.: E21B 4/00, F16C 33/24

(54) **Gleitlager für Tiefbohrwerkzeuge**
Sliding-contact bearing for a deep-drilling tool
Palier lisse pour outil de forage profond

(30) Priorität: 25.03.1987 DE 3709836
(43) Veröffentlichungstag der Anmeldung: 28.09.1988
(73) Patentinhaber: Eastman Teleco Company, Houston, Texas 77032-1925 (US)
(72) Erfinder: Krüger, Volker, Dr.-Ing., D-3100 Celle (DE)
(74) Vertreter: Busse & Busse Patentanwälte

(56) Entgegenhaltungen:
- DE-A- 2 916 347
- GB-A- 2 168 737
- US-A- 4 410 054
- US-A- 4 560 014

## Beschreibung

Die Erfindung betrifft ein Gleitlager für Tiefbohrwerkzeuge, insbesondere Meißeldirektantriebe, gemäß dem Oberbegriff des Patentanspruchs 1.

Bei einem bekannten Gleitlager für Tiefbohrwerkzeuge (US-A 4 560 014) bilden die Formkörper zentriwinklige Abschnitte eines Kreisringes, die bei Anordnung zu einer im wesentlichen geschlossenflächigen Ringbahn im Spurring mit geraden, in Umfangsrichtung blickenden Begrenzungslinien einander benachbart sind. Im Betrieb eines derartigen Gleitlagers werden die von den Lagerelementen des Tragrings überlaufenen Formkörper jeweils schlagartig entlang der gesamten Länge ihrer anlaufseitigen Begrenzungskanten belastet, so daß die Formkörper stark wechselnden Belastungen ausgesetzt sind, die sich verschleißfördernd auswirken.

Bei einem weiterhin bekannten Gleitlager für Tiefbohrwerkzeuge ist ein Spurring vorgesehen (US-Defensive Publication T102 901), der einen ringförmigen Trägerkörper aus Stahl und in Axialbohrungen des Trägerkörpers angebrachte vorgefertigte zylindrische Formkörper aufweist, die eine Lagerschicht aus polykristallinem Diamant und eine Trägerschicht aus einem Sinterwerkstoff umfassen. Die im Spurring in einer ringförmigen Anordnung gesetzten Formkörper stehen mit ihrer mit einer konischen Anfasung versehenen Diamantschicht über die Oberfläche des Trägerkörpers vor und bilden eine Gleitbahn, die sich aus aneinandergrenzenden ringförmigen Gleitflächen zusammensetzt. Der Tragring weist dabei seinerseits zylindrische, an ihrer Oberfläche mit einer polykristallinen Diamantschicht versehene, ringförmig gesetzte Formkörper als Lagersegmente auf, die sich auf der Gleitfläche des Spurrings abstützen.

Eine derartige Ausbildung geht mit ständig wechselnden Belastungsverhältnissen einher, da sich die in gegenseitigem Eingriff stehenden Flächen während einer vollen Umdrehung ständig und stark verändern. Ein Gleitlager mit einer derartigen Ausbildung des Spurrings ist daher in seiner Belastbarkeit begrenzt und unterliegt erheblichem Verschleiß.

Bei einem ferner bekannten Gleitlager (DE-PS 35 13 124) besitzt der Spurring eine zusammenhängende ringförmige Gleitbahn in Gestalt einer Auflage aus einem gesinterten Metallpulver-Keramikwerkstoff oder polykristallinem Diamantwerkstoff. Ein derartiger Spurring ist zwar hoch belastbar und arbeitet unter gleichförmigen Belastungsverhältnissen, ist jedoch kostenaufwendig in der Herstellung, da die Auflage nicht vorfertigbar ist, sondern nur als Ganzes in einem besonderen Arbeitsgang auf den Trägerkörper aufgesintert werden kann.

Der Erfindung liegt die Aufgabe zugrunde, ein günstig herstellbares, hochbelastbares und verschleißarmes Gleitlager zu schaffen. Diese Aufgabe löst die Erfindung bei einem Gleitlager gattunsgemäßer Art durch die kennzeichnenden Merkmale des Patentanspruchs 1. Hinsichtlich wesentlicher weiterer Ausgestaltungen wird auf die Patentansprüche 2 bis 6 verwiesen.

Bei dem erfindungsgemäßen Gleitlager bilden die Oberflächen der Formkörper eine im wesentlichen geschlossene Ringbahn mit an den umfangsseitigen Übergängen mosaikartig ineinandergreifenden Formkörpern, so daß das Gleitlager hochbelastbar und aufgrund der im wesentlichen gleichbleibenden Belastungsverhältnisse auch verschlißarm ist. Die Ausbildung und Anordnung der Formkörper ermöglicht dabei die Verwertung von teilweise abgenutzten Schneidelementen von Drehbohrmeißeln, da sie aus bei Drehbohrmeißeln bevorzugten kreisrunden, üblicherweise einseitig abgenutzten Schneidelementen zugeschnitten werden können.

Weitere Einzelheiten und Vorteile ergeben sich aus der nachfolgenden Beschreibung und der Zeichnung, in der ein Ausführungsbeispiel des Gegenstands der Erfindung schematisch näher veranschaulicht ist. In der Zeichnung zeigen:
- Fig. 1: eine Draufsicht auf eine Hälfte eines Spurrings nach der Erfindung,
- Fig. 2: eine Querschnittsdarstellung zu Fig. 1.

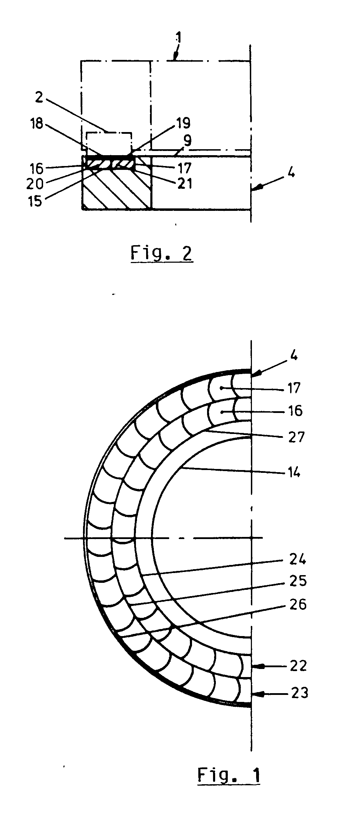

Das Gleitlager für Tiefbohrwerkzeuge, insbesondere Meißeldirektantriebe umfaßt einen in Fig. 2 schematisch in strichpunktierten Linien veranschaulichten Tragring 1, der Lagersegmente 2 aufweist, sowie ein Spurring 4.

Der in Fig. 1 und 2 veranschaulichte Spurring 4 umfaßt einen ringförmigen Trägerkörper 14, der aus Stahl oder einer geeigneten Matrix, z.B. einem Sintermetall, bestehen kann. Die ringförmige Gleitfläche des Spurrings 4 wird von einer Vielzahl von mosaikförmig nebeneinander bündig in die Oberfläche 9 des Trägerkörpers 14 eingelassenen Formkörpern 16,17 gebildet, die mit ihren Oberflächen gemeinsam eine im wesentlichen geschlossenflächige Ringbahn definieren.

Der ringförmige Trägerkörper 14 ist an seiner Oberfläche 9 mit einer Ringnut 15 versehen, in der die Formkörper 16,17 angeordnet sind. Die Formkörper 16,17 können wie dargestellt, an ihrer Oberseite eine Schicht 18 bzw. 19 aus polykristallinem Diamantwerkstoff aufweisen und einen Trägerteil 20,21 umfassen, der aus einem Sinterwerkstoff, z.B. Wolframkarbid oder Tungstenkarbid, besteht. Diese Formkörper 16,17 können durch Einlöten in der Ringnut 15 festgelegt sein, wenn der Trägerkörper 14 wie dargestellt aus Stahl besteht, können aber auch in die Matrix eines aus Sinterwerkstoff bestehenden Trägerkörpers 14 eingesintert sein.

Die Oberflächen der Formkörper 16,17 sind von Kreisbogenabschnittlinien begrenzt und grenzen fugenfrei aneinander. Dabei sind die Formkörper 16,17 zu radial aneinandergrenzenden Ringgruppen 22,23 aneinandergefügt, wobei die einer Ringgruppe 22 oder 23 zugeordneten Formkörper 16 bzw. 17 untereinander gleiche radial innere und äußere Begrenzungslinien aufweisen, die sich zu je einem gemeinsamen Kreisbogen 24,25 bzw. 26 ergänzen.

Die in Umfangsrichtung blickenden Begrenzungslinien der Formkörper 16,17 jeder Ringgruppe 22 bzw. 23 sind von gleichen Kreisbogenabschnittlinien mit kleinem Krümmungsradius gebildet, so daß die etwa sichelförmigen Formkörper 16 bzw. 17 wechselseitig in Umfangsrichtung verhältnismäßig weit ineinandergreifen. Diese Ausgestaltung schafft einen besonders belastbaren Verbund mit einer Gleitfläche 27, die eine völlig geschlossene Ringbahn definiert.

## Patentansprüche

1. Gleitlager für Tiefbohrwerkzeuge, insbesondere Meißeldirektantriebe, mit einem Spurring (4) und einem Tragring (1), von denen der Tragring (1) Lagersegmente aufweist, deren Gleitkörper sich auf der Gleitfläche des Spurrings (4) abtützen, und von denen der Spurring (4) einen ringförmigen Trägerkörper (14), z.B. aus Stahl, und vorgefertigte Formkörper (16,17) aus zumindest oberseitig hartem, verschleißfestem Lagermaterial aufweist, wobei die Gleitfläche des Spurrings (4) von einer Vielzahl von nebeneinander bündig mit der Oberfläche (9) des Trägerkörpers (14) abschließenden Formkörpern (16,17) gebildet ist, die mit ihren Oberflächen gemeinsam eine im wesentlichen geschlossenflächige Ringbahn definieren, **dadurch gekennzeichnet,** daß die in Umfangsrichtung blickenden Begrenzungslinien der Formkörper (16,17) des Spurrings (4) von Kreisbogenabschnittlinien gebildet sind und fugenfrei aneinandergrenzen.

2. Gleitlager nach Anspruch 1, **dadurch gekennzeichnet,** daß die Formkörper (16,17) zu radial aneinandergrenzenden Ringgruppen (22,23) aneinandergefügt sind, wobei die einer Ringgruppe (22,23) zugeordneten Formkörper (16,17) untereinander gleiche, radial innere und radial äußere Begrenzungslinien aufweisen, die sich jeweils zu einem gemeinsamen Kreisbogen (24,25,26) ergänzen.

3. Gleitlager nach Anspruch 2, **dadurch gekennzeichnet,** daß die in Umfangsrichtung blickenden Begrenzungslinien der Formkörper (16,17) jeder Ringgruppe (22,23) von gleichen Kreisbogenabschnittlinien mit kleinem Krümmungsradius gebildet sind.

4. Gleitlager nach einem der Ansprüche 1 bis 3, **dadurch gekennzeichnet,** daß die Formkörper (16,17) aus einem Hartmetall-, Keramik- und/oder polykristallinem Diamantwerkstoff bestehen.

5. Gleitlager nach Anspruch 4, **dadurch gekennzeichnet,** daß die Formkörper (16,17) aus polykristallinem Diamantwerkstoff bestehen und in eine Bestandteil des Spurringes (4) bildende Matrix aus Sinterwerkstoff eingesintert sind.

6. Gleitlager nach Anspruch 4, **dadurch gekennzeichnet,** daß die Formkörper (16,17) an ihrer Oberseite eine Schicht (18,19) aus polykristallinem Diamantwerkstoff aufweisen, die auf einem Trägerteil (20,21) aus Sinterwerkstoff aufgebracht ist, und daß die Formkörper (16,17) in eine Ringnut (15) in der Oberseite des Spurringes (4) eingelötet sind.

## Claims

1. A plain bearing for deep drilling tools, particularly direct bit drives, with a tracking ring (4) and a supporting ring (1), of which the supporting ring (1) has bearing segments of which the sliding contact members are braced against the sliding surface of the tracking ring (4) and of which the tracking ring (4) comprises an annular bearer member (14), for example of steel, and prefabricated shaped members (16, 17) having wear-resistant bearing material at least on their surfaces, the sliding surface of the tracking ring (4) being formed by a plurality of adjacently disposed shaped members (16, 17) which are flush with the surface (9) of the bearer member (14), the surfaces of which jointly define a substantially closed annular track, characterised in that, looking in the peripheral direction, the defining lines of the shaped members (16, 17) of the tracking ring (4) are formed by portions of an arc which are adjacent one another in a joint-free manner.

2. A plain bearing according to Claim 1, characterised in that the shaped members (16, 17) are combined to form radially adjacent ring groups (22, 23), the shaped members (16, 17) associated with one ring group (22, 23) having mutually identical radially inner and radially outer defining lines which supplement one another to form a common arc (24, 25, 26).

3. A plain bearing according to Claim 2, characterised in that, viewed in the peripheral direction, the defining lines of the shaped members (16, 17) of each ring group (22, 23) are formed by identical arcuate portions having a small radius of curvature.

4. A plain bearing according to one of Claims 1 to 3, characterised in that the shaped members (16, 17) consist of a hard metal, ceramic and/or polycrystalline diamond material.

5. A plain bearing according to Claim 4, characterised in that the shaped members (16, 17) consist of polycrystalline diamond material and are sintered into a matrix of sintered material which forms a constituent part of the tracking ring (4).

6. A plain bearing according to Claim 4, characterised in that on their upper surface the shaped members (16, 17) have a layer (18, 19) of polycrystalline diamond material which is applied to a carrier part (20, 21) of sintered material and in that the shaped members (16, 17) are soldered into an annular groove (15) in the top of the tracking ring (4).

## Revendications

1. Palier lisse pour outils de forage profond, en particulier pour des entraînements directs de trépan, comportant un anneau de butée (4) et un anneau de support (1), l'anneau de support (1) comportant des segments de garniture de palier dont les corps glissants prennent appui sur la surface de glissement de l'anneau de butée (4), et l'anneau de butée (4) comportant un corps de support annulaire (14), par exemple en acier, et des corps façonnés préfabriqués (16, 17) en une matière de garniture de palier résistant à l'usure, dure au moins sur sa surface supérieure, la surface de glissement de l'anneau de butée (4) étant formée d'un grand nombre de corps façonnés (16, 17) disposés les uns à côté des autres et se terminant au ras de la surface (9) du corps de support (14), qui, ensemble, définissent par leurs surfaces, une piste annulaire essentiellement fermée, caractérisé en ce que les lignes de délimitation des corps façonnés (16, 17) de l'anneau de butée (4), dirigées dans le sens circonférentiel, sont formées par des lignes de segments d'arc de cercle et sont contiguës l'une à l'autre sans joint.

2. Palier lisse suivant la revendication 1, caractérisé en ce que les corps façonnés (16, 17) sont assemblés en des groupes annulaires (22, 23) radialement adjacents, les corps façonnés (16, 17) associés à un groupe annulaire (22, 23) comportant des lignes de délimitation radialement intérieure et extérieure qui se complètent chacune en un arc de cercle commun (24, 25, 26).

3. Palier lisse suivant la revendication 2, caractérisé en ce que les lignes de délimitation, dirigées dans le sens circonférentiel, des corps façonnés (16, 17) de chaque groupe annulaire (22, 23), sont formées par des lignes de segments d'arc de cercle identiques de petit rayon de courbure.

4. Palier lisse suivant l'une quelconque des revendications 1 à 3, caractérisé en ce que les corps façonnés (16, 17) sont faits d'une matière dure à base de métal, de céramique et/ou de diamant polycristallin.

5. Palier lisse suivant la revendication 4, caractérisé en ce que les corps façonnés (16, 17) sont faits d'une matière diamantée polycristalline et sont frittés dans une matrice en matière frittée faisant partie de l'anneau de butée (4).

6. Palier lisse suivant la revendication 4, caractérisé en ce que les corps façonnés (16, 17) présentent, sur leur surface supérieure, une couche (18, 19) de matière diamantée polycristalline qui est appliquée sur une partie de support (20, 21) en matière frittée, et que les corps façonnés (16, 17) sont soudés dans une gorge annulaire (15) dans la face supérieure de l'anneau de butée (4).
